# EUROPÄISCHE PATENTSCHRIFT

(11) **EP 3 046 658 B1**
(45) Veröffentlichungstag und Bekanntmachung des Hinweises auf die Patenterteilung: **04.04.2018**
(21) Anmeldenummer: 14771302.8
(22) Anmeldetag: 19.09.2014
(51) Int. Cl.: B01D 61/06, B01D 61/12, C02F 1/44, F04F 13/00, F04B 1/20, F04B 1/22

(54) **MEMBRANTRENNVERFAHREN MIT DREHZAHLREGELUNG VON DRUCKTAUSCHER UND FEEDPUMPE**
MEMBRANE SEPARATION METHOD WITH SPEED CONTROL OF PRESSURE EXCHANGER AND FEED PUMP
PROCÉDÉ DE SÉPARATION MEMBRANAIRE À RÉGLAGE DE LA VITESSE DE ROTATION D'ÉCHANGEUR DE PRESSION ET POMPE D'ALIMENTATION

(30) Priorität: 20.09.2013 DE 102013218965
(43) Veröffentlichungstag der Anmeldung: 27.07.2016
(73) Patentinhaber: KSB SE & Co. KGaA, 67227 Frankenthal (DE)
(72) Erfinder: GOLEMBIEWSKI, Wojciech, 67227 Frankenthal (DE); WIELAND, Andreas, 67227 Frankenthal (DE)
(86) Internationale Anmeldenummer: PCT/EP2014/069980
(87) Internationale Veröffentlichungsnummer: WO 2015/040153

(56) Entgegenhaltungen:
- WO-A2-00/50773
- DE-A1-102007 048 316
- DE-A1-102008 044 869
- DE-A1-102010 052 067
- DE-A1-102011 116 864
- JP-A- 2010 063 976
- US-A- 5 482 441
- US-A1- 2006 037 895
- US-B1- 7 988 428

## Beschreibung

Die Erfindung betrifft ein Verfahren zur Aufbereitung einer Flüssigkeit, wobei ein Feedstrom mittels einer Membrananordnung in einen Permeatstrom und einen Retentatstrom getrennt wird und zumindest ein Teil des Retentatstroms über eine Verdrängeranordnung als definiertes Verdrängervolumen von der Membrananordnung abgeführt wird.

Bei der Flüssigkeit kann es sich beispielsweise um eine Lösung handeln, in der Stoffe, beispielsweise Salze, gelöst beziehungsweise fein verteilt sind. Zur Herstellung von zahlreichen Produkten ist eine Aufbereitung von Flüssigkeiten notwendig. Membrantrennverfahren sind insbesondere vorteilhaft, da sie ohne erhitzen auskommen und meist energetisch günstiger sind als thermische Trennverfahren. Einem Membranmodul wird dazu ein Feedstrom zugeführt, der in einen Retentatstrom und einen Permeatstrom aufgeteilt wird. Der Retentatstrom wird beim Trennprozess von der Membran zurückgehalten. Der Permeatstrom tritt durch die Membran.

Die Separation mittels Membranverfahren hat sich unter anderem in der Lebensmitteltechnologie, der Biotechnologie und der Pharmazie etabliert. Je nach Art der verwendeten Membranen ist die selektive Trennung einzelner Stoffe oder bestimmter Stoffgemische möglich.

Man unterscheidet die Membrantrennverfahren nach der treibenden Kraft, die der Trennung zugrunde liegt. Die vorliegende Erfindung betrifft druckgetriebene Prozesse. Eine Anordnung führt den Feedstrom zu einem Membranmodul. Dabei baut die Anordnung einen Druck vor einer semipermeablen Membran auf. Über die Auswahl der Membran lässt sich die Größe der zurückgehaltenen Stoffe einstellen. Je nach Größe der zurückgehaltenen Moleküle unterscheidet man zwischen Mikrofiltration, Ultrafiltration, Nanofiltration und Umkehrosmose.
Als besonders günstig erweisen sich das erfindungsgemäße Verfahren und die erfindungsgemäße Anlage bei der Durchführung einer Umkehrosmose, insbesondere bei der Meerwasserentsalzung. Wird die Flüssigkeit mit einem Druck beaufschlagt, der oberhalb des osmotischen Drucks liegt, diffundieren Wassermoleküle durch die Membran, während die gelösten Salze zurückgehalten werden. Somit wird auf der einen Seite die Salzlösung aufkonzentriert, die als Retentat bezeichnet wird, während auf der anderen Seite salzarmes Trinkwasser gewonnen wird, das als Permeat bezeichnet wird.

Die Erfindung betrifft ein Verfahren zur Aufbereitung einer Flüssigkeit, bei der eine Verdrängeranordnung zur Energierückgewinnung eingesetzt wird. Bei solchen Verdrängersystemen wird die Flüssigkeit durch in sich geschlossene Volumina gefördert. Dabei wird Druck von dem Retentatstrom auf den Feedstrom übertragen. Solche Verdrängeranordnungen werden bei kleinen bis mittelgroßen Meerwasserentsalzungsanlagen eingesetzt, da sie hohe Drücke auch bei kleinen Volumenströmen gewährleisten. Bei diesen Verdrängersystemen ist der gewonnene Permeatstrom abhängig von der Drehzahl und dem Verdrängervolumen pro Umdrehung. Eine Regelung der Ausbeute ist bei diesen Systemen nur über ein Bypass- bzw. Ablassventil im Hochdruckteil möglich. Eine solche Regelung führt zu einer Erhöhung des spezifischen Energieverbrauchs.
Die DE 10 2011 005 964 A1 beschreibt ein Verfahren zur Aufarbeitung einer Flüssigkeit, bei der eine Pumpe einen Feedstrom zu einer Membraneinheit führt. In der Membraneinheit wird der Feedstrom in einen Permeatstrom und einen Retentatstrom getrennt. Eine Auswerteeinheit errechnet aus Prozessdaten die optimale Ausbeute, bei der sich die Anlage mit einem minimal spezifischen Energiebedarf betreiben lässt.
In der EP 1 986 766 B1 wird eine Umkehr-Osmoseanlage beschrieben. Eine Verdrängerpumpe fördert den Feedstrom zu einer Membraneinheit. Nach der Membraneinheit fließt das Retentat durch eine Druck-Rückgewinnungseinheit. Die Druck-Rückgewinnungseinheit ist mit einem Motor verbunden, der wiederum mit der Verdrängerpumpe in Verbindung steht. Über Sensoren wird der Druck vor Eintritt des Feedstroms in die Membraneinheit und nach Austritt des Retentatstroms gemessen. Die Drehzahl des Motors, der mit der Verdrängerpumpe und der Druck-Rückgewinnungseinheit in Verbindung steht, wird in Abhängigkeit der Differenz dieser Drücke geregelt. Eine Variation der Ausbeute ist nur über ein Bypass- bzw. Ablassventil möglich. Dies führt zu Energieverlusten. Die Dokumente DE 10 2008 044 869 und US 5,482,441 offenbaren Umkehr-Osmoseanlagen, in denen der Feedstrom aufgeteilt wird in eine Feedpumpe und eine parallel geschaltete Verdrängereinheit, die über eine gemeinsame Welle mit einer Retentatturbine verbunden ist. Aufgabe der Erfindung ist es, ein Verfahren zur Aufbereitung einer Flüssigkeit anzugeben, das bei Einsatz eines Verdrängersystems einen flexiblen und energieeffizienten Betrieb gewährleistet. Dabei soll ein optimaler Betriebspunkt mit möglichst geringen energetischen und volumetrischen Verlusten einstellbar sein. Das erfindungsgemäße Verfahren soll unterschiedliche Fahrweisen ermöglichen beispielsweise einen kosteneffizienten, energiesparenden oder membranschonenden Betrieb. Dies umfasst einen effizienten Einsatz von Membran, Energie und Wasservorbehandlung, beispielsweise durch Chemikalien.

Diese Aufgabe wird erfindungsgemäß durch ein Verfahren nach Anspruch 1 gelöst. Hierbei wird der Feedstrom aufgeteilt in einen Teil, der über eine Verdrängeranordnung als definiertes Verdrängervolumen der Membrananordnung zugeführt wird und einen Teil, der über eine Fördereinheit der Membrananordnung zugeführt wird, wobei die Ausbeute durch eine Änderung des Verhältnisses der Drehzahl der Fördereinheit zu der Drehzahl der Verdrängeranordnung variiert wird. Die Drehzahlen der Wellen können unabhängig voneinander variiert werden. Die bei dem erfindungsgemäßen Verfahren verwendete Anlage weist sowohl die Verdrängerpumpe als auch die Fördereinheit jeweils eine eigene Welle zum Antrieb auf. Somit werden bei der erfindungsgemäßen Anlage zwei Rotationsmaschinen zur Zuführung des Feedstroms parallel zueinander eingesetzt. Vorzugsweise handelt es sich bei der Fördereinheit um eine Hochdruckpumpe, vorzugsweise eine Kreiselpumpe. Bei der Verdrängeranordnung handelt es sich um eine Verdrängerpumpe, vorzugsweise eine Axialkolbenpumpe. Unterschiedliche Fahrweisen der Anlage ermöglichen auch unterschiedliche Produktionsraten von aufbereiteter Flüssigkeit. Bei gleichbleibender Membranfläche kann der Permeatstrom dadurch erhöht werden, dass der Druck in der Anlage erhöht wird. Hierfür wird als Fördereinheit beispielsweise eine drehzahlveränderliche Verdränger- oder Kreiselpumpe eingesetzt, die bei ansteigendem Druck in der Anlage einen steigenden Volumenstrom bereitstellen kann. Analog kann der Permeatstrom reduziert werden, indem die Drehzahl der Fördereinheit reduziert wird.
Eine energieeffiziente Fahrweise der Anlage kann berücksichtigen, dass beispielsweise Strom aus Sonnen- oder Windenergie genutzt werden kann, wenn er vorhanden ist. Die Fördereinheit ist parallel zu der Verdrängerpumpe angeordnet, so dass der Feedstrom aufgeteilt werden kann in einen Teil, der durch die Verdrängerpumpe fließt und einen Teil, der durch die Fördereinheit fließt.
Mindestens eine Welle steht mit einer Vorrichtung zur Drehzahländerung in Verbindung. Vorzugsweise handelt es sich bei der Vorrichtung um einen Elektromotor, der einen Frequenzumwandler aufweist. Die Anlage weist eine Einheit auf, die zur Drehzahlvariation eingerichtet ist. Dabei kann es sich um eine Auswerte- und/oder Steuer- und/oder Regeleinheit handeln.
Durch die parallele Anordnung einer Fördereinheit mit verstellbarer Drehzahl zu einer Verdrängerpumpe kann das Verhältnis der beiden Teilströme gezielt gesplittet werden. Mithilfe von Prozessdaten, die von Sensoren erfasst werden, kann der Ist-Zustand der Anlage ermittelt werden und mittels der Einheit auf den optimalen Betriebspunkt geregelt werden.
Dadurch ist ein optimaler Betriebspunkt mit geringen energetischen und volumetrischen Verlusten einstellbar. Das erfindungsgemäße Verfahren zum Betrieb der Flüssigkeitsaufbereitungsanlage ermöglicht unterschiedliche Fahrweisen beispielsweise einen energiesparenden Betrieb oder einen membranschonenden Betrieb. Gemäß der Erfindung wird die Ausbeute der Flüssigkeitsaufbereitungsanlage durch eine Änderung des Verhältnisses der Drehzahl der Verdrängerpumpe zu der Drehzahl der dazu parallel geschalteten Fördereinheit variiert. Über das Verhältnis der Drehzahl der Fördereinheit zu der Drehzahl der dazu parallel geschalteten Verdrängeranordnung kann eine optimale Ausbeute ohne größere Energieverluste eingestellt werden.
Ist die optimale Ausbeute erreicht, so kann die gewünschte Ausbringmenge eingestellt werden. Dabei wird das Verhältnis der Drehzahlen zwischen der Verdrängeranordnung und der parallel geschalteten Fördereinheit konstant gehalten und die Drehzahl insgesamt entweder erhöht oder reduziert. Gemäß der Erfindung werden die Verdrängeranordnung zur Zuführung des Feedstroms und die Verdrängeranordnung zur Energierückgewinnung aus dem Retentatstrom mit der gleichen Drehzahl betrieben. Vorzugsweise werden beide Verdrängeranordnungen von einer gemeinsamen Wellenanordnung angetrieben. Die Wellenanordnung steht mit einem Elektromotor in Verbindung, dessen Drehzahl verändert werden kann.
Bei einer günstigen Variante der Erfindung weist mindestens eine Verdrängeranordnung eine Trommel mit Zylindern auf, in denen Kolben angeordnet sind. Dabei kann es sich um eine Axialkolbenpumpe und/oder einen Axialkolbenmotor handeln. Bei dieser Ausführung umfasst die Verdrängeranordnung eine Schrägscheibe. Die Kolben sind mit Gleitschuhen verbunden und weisen eine zu einer Schrägscheibe weisende Fläche auf. Die Schrägscheiben sind feststehend und sorgen dafür, dass die Kolben bei einer Drehbewegung der Trommeln unterschiedliche Stellungen einnehmen. Bei einer besonders günstigen Ausführung der Erfindung entspricht das der Membrananordnung zugeführte Verdrängervolumen gleich dem von der Membrananordnung abgeführten Verdrängervolumen.

Als günstig erweist es sich, wenn beide Verdrängeranordnungen in einer Baueinheit angeordnet sind. Vorzugsweise ist zwischen den Verdrängeranordnungen ein Verteilerblock positioniert. Dabei bildet der Verteilerblock das zentrale Bauteil, welches die Flüssigkeitsströme verteilt. Dazu weist der Verteilerblock vorzugsweise einen Feedstromein- und -ausgang und einen Retentatstromein- und -ausgang auf. Der Elektromotor, welcher die Verdrängeranordnungen antreibt, ist bei dieser Konstruktion außerhalb der Baueinheit, bestehend aus den beiden Verdrängeranordnungen und dem dazwischen mittig positionierten Verteilerblock angeordnet.

Weitere Merkmale und Vorteile der Erfindung ergeben sich aus der Beschreibung eines Ausführungsbeispiels anhand von Zeichnungen und aus den Zeichnungen selbst. Dabei zeigt:
- Figur 1: ein Fließschema einer Anlage zur Meerwasserentsalzung,
- Figur 2: einen Axialschnitt einer Einheit von Verdrängeranordnungen.

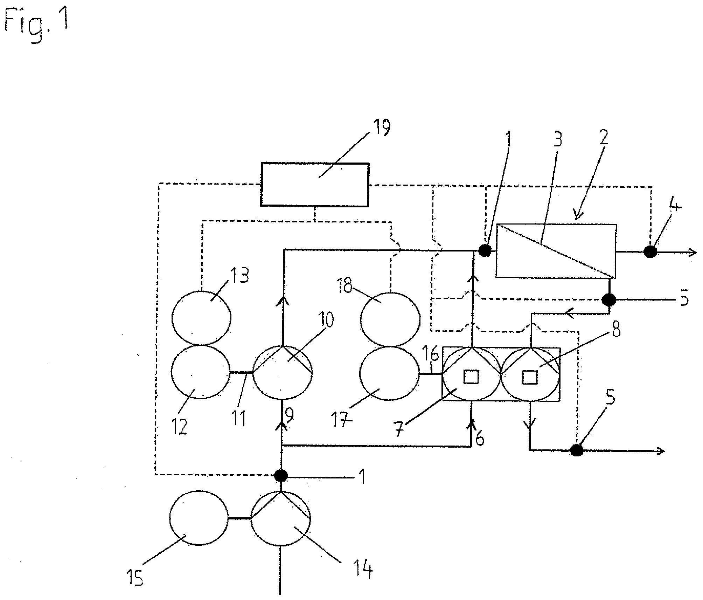

Figur 1 zeigt ein Fließbild einer Anlage zur Meerwasserentsalzung. Meerwasser wird als Feedstrom 1 einer Membrananordnung 2 zugeführt. Die Membrananordnung 2 weist eine semipermeable Membran 3 auf, welche den Feedstrom 1 in einen Permeatstrom 4 und einen Retentatstrom 5 trennt. Im Ausführungsbeispiel handelt es sich bei dem Permeatstrom 4 um Trinkwasser und bei dem Retentatstrom 5 um aufkonzentriertes Meerwasser.

In der Membrananordnung 2 findet eine Umkehrosmose (RO - Reverse Osmosis) statt. Der Druck in der Membrananordnung vor der semipermeablen Membran 3 ist höher als der osmotische Druck.

Ein Teil 6 des Feedstroms 1 wird über eine Verdrängeranordnung 7 als definiertes Verdrängervolumen der Membrananordnung 2 zugeführt. Der Retentatstrom 5 wird über eine Verdrängeranordnung 8 als definiertes Verdrängervolumen von der Membrananordnung 2 abgeführt.

Erfindungsgemäß wird der Feedstrom 1 aufgeteilt, wobei ein Teil 9 des Feedstroms 1 über eine Fördereinheit 10 der Membrananordnung 2 zugeführt und ein Teil 6 über die Verdrängeranordnung 7 fließt. Bei der Fördereinheit 10 handelt es sich im Ausführungsbeispiel um eine Hochdruckpumpe, die über eine Wellenanordnung 11 mittels eines Motors 12 angetrieben wird. Der Motor 12 steht mit einem Frequenzumwandler 13 in Verbindung. Bei der Verdrängeranordnung 7 handelt es sich im Ausführungsbeispiel um eine Axialkolbenpumpe.

Der Feedstrom 1 strömt zunächst über eine Vorpumpe 14 und teilt sich dann in den Teilstrom 6 und den Teilstrom 9 auf. Die Vorpumpe 14 wird über einen Motor 15 angetrieben.

Im Ausführungsbeispiel sind die Verdrängeranordnung 7 und die Verdrängeranordnung 8 über eine Wellenanordnung 16 verbunden. An einem Ende der Wellenanordnung 16 ist ein Elektromotor 17 angeschlossen, der mit einem Frequenzumwandler 18 in Verbindung steht. Um unterschiedliche Betriebszustände einzustellen, wird erfindungsgemäß die Drehzahl der Fördereinheit 10 und/oder die Drehzahl einer Verdrängeranordnung 7, 8 variiert.

Die Ausbeute wird durch eine Änderung des Verhältnisses der Drehzahl der Fördereinheit 10 zu der Drehzahl der Verdrängeranordnung 7 variiert. Die Ausbeute ist das Verhältnis von Permeatstrom 4 zu Feedstrom 1.

Im Ausführungsbeispiel werden die Verdrängeranordnungen 7, 8 mit der gleichen Drehzahl über eine gemeinsame Wellenanordnung 16 betrieben und das zugeführte Verdrängervolumen über den Teilstrom 6 ist gleich dem abgeführten Verdrängervolumen über den Retentatstrom 5. Daher entspricht der Permeatstrom 4 gleich dem Teilstrom 9, der über die Fördereinheit 10 zugeführt wird. Durch Änderung der Drehzahl der Fördereinheit 10 kann somit gezielt der Permeatstrom 4 und somit die Ausbeute variiert werden. Wird die Drehzahl erhöht, so erhöht sich der Permeatstrom 4 und die Ausbeute steigt. Wird die Drehzahl der Fördereinheit 10 verringert, so sinkt der Permeatstrom 4 und die Ausbeute nimmt ab. Die Anlage weist eine Einheit 19 auf, die zur Drehzahlvariation eingerichtet ist. Bei der Einheit 19 handelt es sich um eine Steuer-/Regel-/Auswerteinheit, welche Signale erfasst und Signale aussendet. Die Einheit 19 steht mit dem Frequenzumwandler 13 und dem Frequenzumwandler 18 in Verbindung. An den als ausgefüllte Kreise dargestellten Stellen der Anlage sind Sensoren angeordnet. Über diese Sensoren werden Prozessdaten erfasst und an die Einheit 19 weitergeleitet. Bei den Prozessdaten handelt es sich um die Temperatur und/oder die Salinität und/oder den Druck und/oder den Volumenstrom an unterschiedlichen Stellen der Anlage. So wird beispielsweise die Temperatur, die Salinität, der Druck und/oder der Volumenstrom des Feedstroms 1 vor der Aufteilung in die beiden Teilströme 9, 6 erfasst. Weiterhin wird der Druck und die Temperatur des Feedstroms 1 nach erneutem Zusammenführen der Teilströme 9, 6, vor Eintritt in die Membrananordnung 2, erfasst. Auch der Volumenstrom des Permeatstroms 4 wird gemessen. Weiterhin werden der Druck und die Temperatur des Retentatstroms 5 vor Eintritt in die Verdrängeranordnung 8 und nach Austritt aus der Verdrängeranordnung 8 erfasst. Alle Prozessdaten werden als elektrische Signale an die Einheit 19 übermittelt.
Die Einheit 19 errechnet aus den Prozessdaten die aktuelle Ausbeute und die optimale Ausbeute. Weiterhin ermittelt die Einheit 19 mittels eines Algorithmus eine optimale Ausbeute als Sollwert, bei der die Anlage mit einem minimalen Energiebedarf betrieben werden kann. Die Abweichung des Ist-Werts vom Soll-Wert ergibt eine Regeldifferenz. In Abhängigkeit dieser Regeldifferenz ändert die Einheit 19 die Drehzahl der Fördereinheit 10 und/oder die Drehzahl der Verdrängeranordnung 7, 8. Dadurch kann die Ausbeute gezielt variiert und an ihren optimalen Betriebspunkt angepasst werden. Bei dem erfindungsgemäßen System geschieht dies weitgehend ohne Energieverluste, da im Gegensatz zu herkömmlichen Verdrängerverfahren kein Bypassventil bzw. Ablassventil zur Einstellung der Ausbeute zum Einsatz kommt.

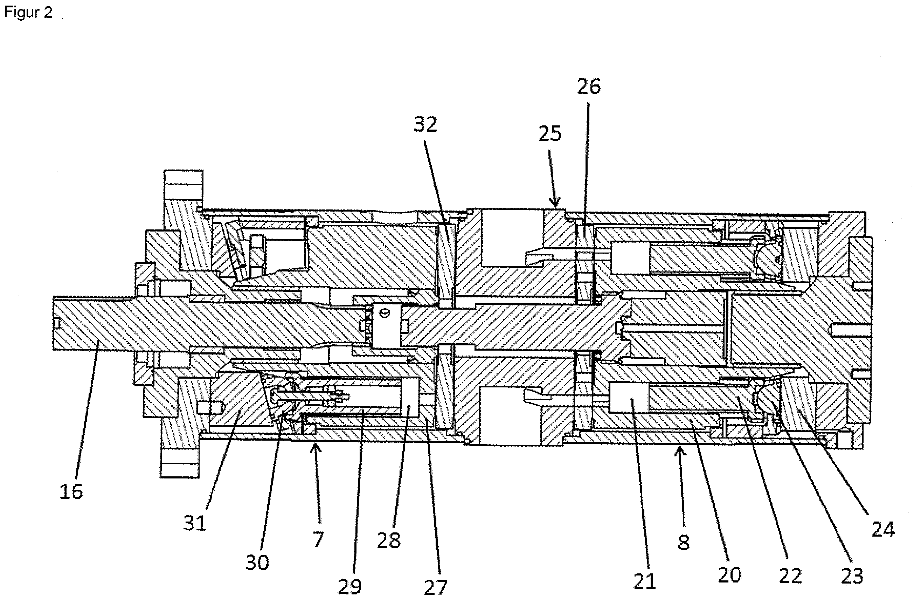

Die beiden Verdrängeranordnungen 7, 8 sind in eine Baueinheit integriert. Diese ist in Figur 2 als Axialschnitt dargestellt. Zentrales Bauteil der Baueinheit ist ein Verteilerblock 25, der zwischen den beiden Verdrängeranordnungen 7, 8 positioniert ist. Mithilfe von stabartigen Elementen wird die kompakte Baueinheit bestehend aus den beiden Verdrängeranordnungen 7, 8 und dem Verteilerblock 25 zusammengehalten. Im Ausführungsbeispiel sind die stabartigen Elemente als Stangen mit einem runden Querschnitt ausgeführt. Die stabartigen Elemente weisen an mindestens einem Ende ein Befestigungsmittel auf. Im Ausführungsbeispiel sind die Befestigungsmittel als Muttern mit einem Innengewinde ausgeführt, die auf Außengewinde der stabartigen Elemente aufgeschraubt werden und dadurch die Verdrängeranordnungen 7, 8 und den Verteilerblock 25 zu einer Einheit verspannen.

Der in Fig. 1 gezeigte Elektromotor 17 ist erfindungsgemäß außerhalb der kompakten Baueinheit über ein Wellenende angeschlossen ist. Der Elektromotor 17 steht mit einem Frequenzumwandler 13 in Verbindung.

Der Verteilerblock 25 ist vorzugsweise einstückig ausgebildet. Der Verteilerblock 25 weist eine Eintrittsöffnung für den Teil 6 des Feedstroms 1 und eine Eintrittsöffnung für den Retentatstrom auf. Der Verteilerblock 25 ist quaderförmig ausgeführt. Auf der gegenüberliegenden Seite der Eintrittsöffnung für den Feedstrom befindet sich die Austrittsöffnung für den Teil 6 des Feedstroms 1, die in den Figuren nicht dargestellt ist. Auf der gegenüberliegenden Seite der Eintrittsöffnung für den Retentatstrom 5 befindet sich die Austrittsöffnung.

Figur 2 zeigt, dass die Verdrängeranordnung 8 zur Energierückgewinnung aus dem Retentatstrom 5 eine Trommel 20 mit Zylindern 21 aufweist, die entlang eines kreisförmigen Umfangs angeordnet sind. In den Zylindern 21 sind Kolben 22 angeordnet. Jeder Kolben 22 ist mit einem Gleitschuh 23 verbunden. Jeder Gleitschuh 23 hat Flächen, die zu einer Schrägscheibe 24 weisen. Die Flächen sind aus Polyetheretherketon (PEEK). Der Werkstoff ermöglicht eine Mediumschmierung durch einen Teil des Retentatstroms 5 zwischen der Schrägsscheibe 24 und den Gleitschuhen 23.

Die Schrägscheibe 24 ist feststehend an einem begrenzenden Bauteil angeordnet. Das begrenzende Bauteil hat ein quaderförmiges Profil und weist in seiner Mitte eine Bohrung auf, in die ein zylinderartiges Bauteil eingefügt ist. Das begrenzende Bauteil weist Bohrungen auf, durch welche die stabartigen Elemente ragen. Durch die Eintrittsöffnung fließt der Retentatstrom 5 in die Zylinder 21 der Trommel 20. Dadurch werden die Kolben 22 axial verschoben. Dies führt zu einer Drehbewegung der Trommel 20. Die Trommel 20 ist drehfest mit einer Wellenanordnung 16 verbunden. Im Ausführungsbeispiel besteht die Wellenanordnung 16 aus mehreren Elementen.

Zwischen dem Verteilerblock 25 und der Trommel 20 ist eine Steuerscheibe 26 angeordnet. Die Steuerscheibe 26 weist eine bogenförmige Öffnung auf. Die Trommel 20 samt der Zylinder 21 dreht sich. Die Zylinder 21, welche mit der bogenförmigen Öffnung der Steuerscheibe 26 in Verbindung stehen, werden mit Retentatstrom 5 befüllt, der durch eine Öffnung einströmt.

Aus den Zylindern 21, welche mit einer bogenförmigen Austrittsöffnung der Steuerscheibe 26 in Verbindung stehen, strömt der Retentatstrom 5 aus. Der Retentatstrom 5 treibt die Trommel 20 an.

Die Drehbewegung der Trommel 20 wird über die Wellenanordnung 16 unmittelbar auf eine Trommel 27 übertragen, ohne dass ein weiteres Bauteil dazwischen geschaltet ist, beispielsweise ein Elektromotor.

Die Trommel 27 ist drehfest mit der Wellenanordnung 16 verbunden. Die Trommel 27 weist Zylinder 28 auf, die entlang eines kreisförmigen Umfangs angeordnet sind. In den Zylindern 28 sind Kolben 29 axial verschieblich gelagert.

Die Öffnungen der Zylinder 21, 28 beider Trommeln 20, 27 sind zu dem Verteilerblock 25 gerichtet.

Vorzugsweise weist der Verteilerblock 25 vier von einander räumlich getrennte Kammern auf. Eine Kammer für den einströmenden Retentatstrom 5, eine Kammer für den ausströmenden Retentatstrom 5, eine Kammer für den einströmenden Teil 6 des Feedstroms 1 und eine Kammer für den ausströmenden Teil 6 des Feedstroms 1.

Die Kammern sind räumlich von einander getrennt, so dass es zu keiner Vermischung zwischen den Strömen kommt. Dabei erweist es sich als günstig, wenn jede Kammer eine Eingangsöffnung und eine Ausgangsöffnung für den jeweiligen Strom aufweist, wobei zwei der Kammern jeweils eine Öffnung haben, die zu den Zylindern 21 der einen Trommel 20 weisen und zwei Kammern jeweils eine Öffnung haben, die zu den Zylindern 28 der anderen Trommel 27 weisen.

Bei einer bevorzugten Ausführung der Erfindung weist der Verteilerblock 25 eine mittig angeordnete Öffnung auf, durch welche die Wellenanordnung 16 verläuft. Die räumlich abgeschlossenen Kammern des Verteilerblocks 25 sind um diese mittige Öffnung angeordnet.

Jeder Kolben 29 ist mit einem Gleitschuh 30 verbunden. Die Gleitschuhe 30 weisen Flächen auf, welche zu einer Schrägscheibe 31 weisen. Die Flächen sind aus Polyetheretherketon (PEEK). Der Werkstoff ermöglicht eine Mediumschmierung durch den Feedstrom zwischen den stillstehenden Teilen und den bewegten Teilen.

Die Schrägscheibe 31 ist feststehend und mit einem begrenzenden Bauteil verbunden. Das begrenzende Bauteil weist in scheibenförmiges Profil und eine Öffnung in seiner Mitte auf, durch die ein zylinderartiges Bauteil eingefügt ist. Innerhalb dieses zylinderartigen Bauteils verläuft die Wellenanordnung 16. Das Ende der Wellenanordnung 16 weist einen Anschluss für den Elektromotor 17 auf.

Die Trommel 20 wird von dem Retentatstrom 5 in Bewegung versetzt. Über die Wellenanordnung 16 wird die Drehbewegung auf die Trommel 27 übertragen. Durch die Drehbewegung der Trommel 27 bewegen sich die Kolben 29 in den Zylindern 28 der Trommel 27 und fördern den Teil 6 des Feedstroms 1. Durch eine Öffnung tritt der Teil 6 des Feedstrom 1 in den Verteilerblock 25 ein. Zwischen dem Verteilerblock 25 und der Trommel 27 ist eine Steuerscheibe 32 angeordnet. Die Steuerscheibe 32 weist eine bogenförmige Eintrittsöffnung und eine bogenförmige Austrittsöffnung auf. Die Eintrittsöffnungen und Austrittsöffnungen der Steuerscheibe 32 sind um 90° gegenüber den Eintrittsöffnungen und Austrittsöffnungen der Steuerscheibe 26 versetzt. Durch die Eintrittsöffnung der Steuerscheibe 32 strömt der Teil 6 des Feedstrom 1 in die Zylinder 28 der Trommel 27. Durch eine Öffnungsbewegung der Kolben 29 wird der Teil 6 des Feedstroms 2 dabei angesaugt. Die Trommel 27 mit den Zylindern 28 dreht sich weiter. Durch die Zylinder 28, die mit der Austrittsöffnung der Steuerscheibe 32 in Verbindung stehen, wird der Teil 6 des Feedstrom 1 aus den Zylindern 28 mittels der Kolben 29 herausgedrückt.

Der Retentatstrom 5 tritt mit einem hohen Druck in die Baueinheit ein und verlässt diese mit einem niedrigeren Druck. Der Teil 6 des Feedstroms 1 tritt mit einem niedrigen Druck in die Baueinheit ein und verlässt diese mit einem höheren Druck. In der Baueinheit wird Druck vom Retentatstrom 5 auf den Teil 6 des Feedstroms 1 übertragen.

Der Elektromotor 17 führt über die Wellenanordnung 16 Energie zu, die aufgrund des Druckverlusts in der Membrananordnung 2 verloren geht.

Die Vorrichtung weist Kanäle auf, teilweise auch in Form von Bohrungen, durch die ein Teil des Retentatstroms 5 beziehungsweise ein Teil des Feedstroms 1 zu Spalten zwischen feststehenden und bewegten Bauteilen geführt wird, beispielsweise zwischen den feststehenden Schrägschreiben 24, 31 und den Flächen der Gleitschuhe 23, 30.

## Patentansprüche

1. Verfahren zur Aufbereitung einer Flüssigkeit, wobei ein Feedstrom (1) mittels einer Membrananordnung (2) in einen Permeatstrom (4) und einen Retentatstrom (5) getrennt wird und zumindest ein Teil des Retentatstroms (5) über eine erste Verdrängeranordnung (8) als definiertes Verdrängervolumen von der Membrananordnung (2) abgeführt wird, wobei der Feedstrom (1) aufgeteilt wird in einen Teil (6), der über eine zweite Verdrängeranordnung (7) als definiertes Verdrängervolumen der Membrananordnung (2) zugeführt wird und einen Teil (9) der mittels einer Fördereinheit (10) der Membrananordnung (2) zugeführt wird, wobei die beiden Verdrängeranordnungen (7,8) mit der gleichen Drehzahl betrieben werden, wobei durch eine Änderung des Verhältnisses der Drehzahl der Fördereinheit (10) zu der Drehzahl der zweite Verdrängeranordnung (7) die Ausbeute variiert wird, **dadurch gekennzeichnet, dass**
Parameter der Membrananordnung (2) bestimmt werden, insbesondere Durchlässigkeit, wirksame Oberfläche und Verbrauchsstadium, dass Parameter des Feedstroms (1) bestimmt werden, insbesondere Salinität, Temperatur und Druck, dass die Fahrweise der Anlage vorgegeben wird, wobei die Regelung das Verhältnis der Drehzahlen der Fördereinheit (10) zu der der Verdrängeranordnung (7) durch die Fahrweise anpasst, wobei die Ausbeute der Flüssigkeitsaufbereitungsanlage durch eine Änderung des Verhältnisses der Drehzahl der Verdrängerpumpe zu der Drehzahl der dazu parallel geschalteten Fördereinheit variiert, wobei über das Verhältnis der Drehzahl der Fördereinheit zu der Drehzahl der dazu parallel geschalteten Verdrängeranordnung eine optimale Ausbeute ohne größere Energieverluste eingestellt wird, wobei daraufhin die absolute Drehzahl durch den gewünschten Permeatstrom vorgegeben wird, welcher durch Erhöhung oder Reduzierung der Drehzahlen der Fördereinheit (10) und der zweiten Verdrängereinheit (7) bei konstantem Verhältnis der Drehzahlen zueinander variiert wird.

2. Verfahren nach Anspruch 1 **dadurch gekennzeichnet, dass** das zugeführte Verdrängervolumen gleich dem abgeführten Verdrängervolumen ist.

3. Verfahren nach einem der Ansprüche 1 bis 2, **dadurch gekennzeichnet, dass** eine Einheit (19) als Soll-Wert eine optimale Ausbeute aus Prozessdaten errechnet, die Abweichung des Ist-Werts vom Soll-Wert ermittelt und in Abhängigkeit dieser Abweichung die Drehzahl der Fördereinheit (10) und/oder die Drehzahl einer Verdrängeranordnung (7, 8) variiert.

## Claims

1. Method for treating a liquid, wherein a feed stream (1) is separated into a permeate stream (4) and a retentate stream (5) by means of a membrane arrangement (2), and at least a portion of the retentate stream (5) is discharged as a defined displacement volume from the membrane arrangement (2) via a first displacement arrangement (8), wherein the feed stream (1) is divided into a portion (6) which is fed as a defined displacement volume to the membrane arrangement (2) via a second displacement arrangement (7) and into a portion (9) which is fed to the membrane arrangement (2) by means of a delivery unit (10), wherein the two displacement arrangements (7, 8) are operated at the same rotational speed, wherein the yield is varied by changing the ratio of the rotational speed of the delivery unit (10) to the rotational speed of the second displacement arrangement (7),
**characterized in that**
parameters of the membrane arrangement (2), in particular permeability, effective surface area and stage of consumption, are determined, **in that** parameters of the feed stream (1), in particular salinity, temperature and pressure, are determined, **in that** the mode of operation of the system is predefined, wherein the control system adapts the ratio of the rotational speed of the delivery unit (10) to the rotational speed of the displacement arrangement (7) by way of the mode of operation, wherein the yield of the liquid treatment system varies by changing the ratio of the rotational speed of the displacement pump to the rotational speed of the delivery unit connected in parallel therewith, wherein an optimum yield is set, without relatively large energy losses, via the ratio of the rotational speed of the delivery unit to the rotational speed of the displacement unit connected in parallel therewith, wherein, subsequently, the absolute rotational speed is predefined by the desired permeate stream which is varied by increasing or reducing the rotational speeds of the delivery unit (10) and the second displacement unit (7) while keeping constant the ratio of the rotational speeds with respect to one another.

2. Method according to Claim 1,
**characterized in that**
the fed displacement volume is equal to the discharged displacement volume.

3. Method according to either of Claims 1 and 2,
**characterized in that**
a unit (19) calculates as a target value an optimum yield from process data, determines the deviation of the actual value from the target value and, in dependence on said deviation, varies the rotational speed of the delivery unit (10) and/or the rotational speed of a displacement arrangement (7, 8).

## Revendications

1. Procédé de traitement d'un liquide, dans lequel un écoulement d'alimentation (1) est séparé au moyen d'un ensemble (2) à membrane en un flux de perméat (4) et un flux de rétentat (5),
au moins une partie du flux de rétentat (5) étant évacuée sous la forme d'un volume refoulé défini de l'ensemble (2) à membrane par l'intermédiaire d'un premier ensemble de refoulement (8),
l'écoulement d'alimentation (1) étant divisé en une partie (6) amenée sous la forme d'un volume défini de refoulement par un deuxième ensemble de refoulement (7) à l'ensemble (2) à membrane et une partie (9) amenée à l'ensemble (2) à membrane au moyen d'une unité de transport (10),
les deux ensembles de refoulement (7, 8) étant conduits à la même vitesse de rotation,
une modification du rapport entre la vitesse de rotation de l'unité de transport (10) et la vitesse de rotation du deuxième ensemble de refoulement (7) faisant varier le rendement,
**caractérisé en ce que**
des paramètres de l'ensemble (2) à membrane sont déterminés, en particulier la perméabilité, la surface efficace et l'état d'usure,
**en ce que** des paramètres de l'écoulement d'alimentation (1) sont déterminés, en particulier la salinité, la température et la pression,
**en ce que** le mode de conduite de l'installation est prédéterminé,
la régulation du rapport entre la vitesse de rotation de l'unité de transport (10) et celle de l'ensemble de refoulement (7) étant adaptée par l'intermédiaire du mode de conduite, le rendement de l'installation de traitement de liquide variant par modification du rapport entre la vitesse de rotation de la pompe de refoulement et la vitesse de rotation de l'unité de transport raccordée en parallèle,
un rendement optimal étant établi sans pertes d'énergie plus élevées par l'intermédiaire du rapport entre la vitesse de rotation de l'unité de transport et la vitesse de rotation de l'ensemble de refoulement raccordé en parallèle,
la vitesse de rotation absolue étant prédéterminée par le flux de perméat souhaité, qui est modifié par augmentation ou réduction des vitesses de rotation de l'unité de transport (10) et de la deuxième unité de refoulement (7) tout en maintenant constant le rapport entre ces vitesses de rotation.

2. Procédé selon la revendication 1, **caractérisé en ce que** le volume de refoulement amené est identique au volume de refoulement évacué.

3. Procédé selon l'une des revendications 1 et 2, **caractérisé en ce qu'**une unité (19) calcule comme valeur de consigne un rendement optimal à partir de données du processus, **en ce que** l'écart entre la valeur effective et la valeur de consigne est déterminé et **en ce que** la vitesse de rotation de l'unité de transport (10) et/ou la vitesse de rotation d'un ensemble de refoulement (7, 8) sont modifiées en fonction de cet écart.
